# EUROPEAN PATENT APPLICATION

(11) **EP 4 660 568 A1**
(43) Date of publication of application: **10.12.2025**
(21) Application number: 25181322.6
(22) Date of filing: 06.06.2025
(51) Int. Cl.: F41G 1/35, F41G 3/14

(54) **VARIABLE DIVERGENCE OPTICAL DIFFUSER**

(30) Priority: 07.06.2024 US 202418737326
(71) Applicant: B.E. Meyers & Co., Inc., Redmond, WA 98052 (US)
(72) Inventor: Nelson, Spencer, Redmond, WA 98052 (US)
(74) Representative: Grünecker Patent- und Rechtsanwälte PartG mbB

(57) **Abstract**

A variable optical diffuser system includes a mounting unit and a diffuser unit coupled to the mounting unit and positionable by the mounting unit into an optical path of a group of co-aligned laser sources. The diffuser unit includes diffuser elements having fixed positions with respect to the diffuser unit, where the mounting unit facilitates adjusting a position of the diffuser unit within the optical path of the group of co-aligned laser sources, and where the diffuser elements alter angular beam widths of emitted light from respective ones of the group of co-aligned laser sources according to a function of the position of the diffuser unit within the optical path of the group of co-aligned laser sources.

## Description

### BACKGROUND

Illuminator devices, such as weapon-mounted illuminators, can utilize one or more light sources to project an illumination beam in a desired direction, e.g., toward a defined target. Some illuminator devices are infrared (IR) illuminators, which emit light outside of the visible spectrum that can be seen through the use of a night vision device (NVD) or a similar device. Additionally, some illuminator devices can provide pointing functionality (e.g., via a laser source) and/or other functions in addition to illumination.

An illuminator device can desirably have a high level of output power and a range of angles of emission, referred to herein as "beam divergence," to control the irradiance at the target, e.g., to increase the beam performance of the illumination provided by the device and increase the amount of visual information available to the device operator. However, increases to the output power and decreases to the far field beam divergence of an illuminator device often come with drawbacks such as increased device size, reduced illumination quality, or reduced ease of use. It is therefore desirable to implement techniques by which the irradiance of an illuminator device can be increased while maintaining optimal illumination quality over a range of divergences in a compact package size.

### SUMMARY

The following summary is a general overview of various embodiments disclosed herein and is not intended to be exhaustive or limiting upon the disclosed embodiments. Embodiments are better understood upon consideration of the detailed description below in conjunction with the accompanying drawings and claims.

In an implementation, a system is described herein. The system can include a mounting unit and a diffuser unit coupled to the mounting unit and positionable by the mounting unit into an optical path of a group of co-aligned laser sources. The diffuser unit can include diffuser elements having fixed positions with respect to the diffuser unit. The mounting unit can facilitate adjusting a position of the diffuser unit within the optical path of the group of co-aligned laser sources, and the diffuser elements can alter angular beam widths of emitted light from respective ones of the group of co-aligned laser sources according to a function of the position of the diffuser unit within the optical path of the group of co-aligned laser sources.

In another implementation, another system is described herein. The system can include a diffuser wheel positionable into an optical path of a laser array. The system can further include diffuser elements formed into the diffuser wheel, where the diffuser elements alter an angular divergence of light emitted from the system via the laser array based on a rotational position of the diffuser wheel.

In an additional implementation, a method is described herein. The method can include passing a light beam emitted from co-aligned laser sources through patterned diffuser elements of a diffuser unit positioned in an optical path of the co-aligned laser sources. The method can further include adjusting a first position of at least one of the patterned diffuser elements of the diffuser unit relative to a second position of at least one laser source of the co-aligned laser sources, resulting in an amount of angular divergence of the light beam that is a function of the first position and the second position.

### DESCRIPTION OF DRAWINGS

Various non-limiting embodiments of the subject disclosure are described with reference to the following figures, wherein like reference numerals refer to like parts throughout unless otherwise specified.
FIG. 1 is a block diagram of a variable optical diffuser system in accordance with various implementations described herein.
FIG. 2 is a diagram depicting a simplified front view of an example implementation of the diffuser unit of FIG. 1.
FIGS. 3-4 are diagrams depicting respective variable optical diffuser systems in accordance with various implementations described herein.
FIG. 5 is a diagram depicting an isometric view of an optical path passing through an example variable optical diffuser in accordance with various implementations described herein.
FIGS. 6-8 are diagrams depicting respective example laser array configurations that can be used with a variable optical diffuser in accordance with various implementations described herein.
FIG. 9 is a diagram depicting a cross sectional view of an example variable optical diffuser in accordance with various implementations described herein.
FIGS. 10-11 are block diagrams of respective systems that facilitate light emission control for a laser array in accordance with various implementations described herein.
FIGS. 12-13 are diagrams depicting respective example multi-wavelength laser arrays that can be used with a variable optical diffuser in accordance with various implementations described herein.
FIG. 14 is a diagram depicting a front view of an example implementation of the diffuser unit of FIG. 1.
FIG. 15 is a diagram depicting an isometric view of the diffuser unit of FIG. 14.
FIG. 16 is a diagram depicting a front view of another example implementation of the diffuser unit of FIG. 1.
FIG. 17 is a diagram depicting an isometric view of the diffuser unit of FIG. 16.
FIGS. 18-20 are diagrams depicting light diffusion angles that can be achieved via respective gradient patterns applied to diffuser elements of a diffuser unit in accordance with various implementations described herein.
FIG. 21 is a diagram depicting a front view of an adjustable illumination and pointing system including a variable optical diffuser in accordance with various implementations described herein.
FIG. 22 is a flow diagram of a method that facilitates illumination and/or pointing via a variable optical diffuser in accordance with various implementations described herein.
FIG. 23 is a diagram depicting example diffusion angles that can be facilitated by a variable optical diffuser in accordance with various implementations described herein.

### DETAILED DESCRIPTION

Various specific details of the disclosed embodiments are provided in the description below. One skilled in the art will recognize, however, that the techniques described herein can in some cases be practiced without one or more of the specific details, or with other methods, components, materials, etc. In other instances, well-known structures, materials, or operations are not shown or described in detail to avoid obscuring subject matter. Additionally, it is noted that the drawings are not drawn to scale, either within the same drawing or between different drawings.

Described herein are illuminator systems, e.g., laser illumination systems, that can utilize a variable divergence optical diffuser composed of respective diffuser elements to vary characteristics of an illumination beam, such as a target width of the illumination beam, etc., that is provided via the illuminator system. While various examples herein relate to a firearm-mounted laser illuminator, it is noted that these examples are used merely to provide context for the implementations described herein and that, unless explicitly stated otherwise, the implementations herein are not intended to be limited to any particular mounting configuration or use case. Further described herein are methods of using an illuminator system, e.g., as set forth above, to provide a variable-width illumination beam in a compact package suitable for field use.

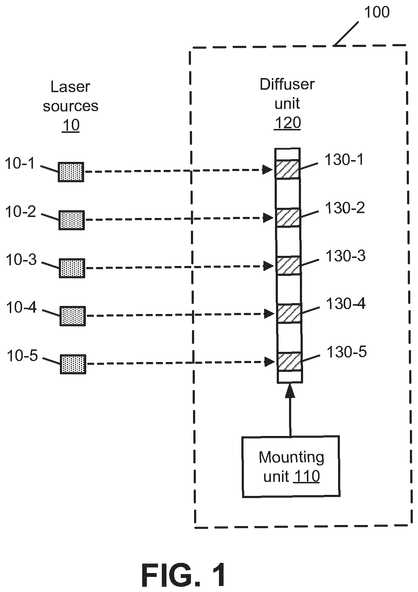

With reference now to the drawings, FIG. 1 is a block diagram of a variable divergence optical diffuser system 100, also referred to as simply "system 100" for brevity, in accordance with various implementations described herein. System 100 as shown in FIG. 1 includes a mounting unit 110 and a diffuser unit 120 coupled to the mounting unit 110 and positionable by the mounting unit 110 into an optical path of a group of co-aligned laser sources 10, here five laser sources 10-1 through 10-5. While the laser sources 10 are illustrated in FIG. 1 as being separate from system 100, it is noted that system 100 and the laser sources 10 could both be implemented into a common device, such as an illuminator and/or pointer device. For instance, the laser sources 10 and system 100 could be incorporated into a common device housing and/or separate device housings that are designed to interconnect and/or otherwise facilitate interaction between the laser sources 10 and system 100. It is further noted that various implementations of system 100 could have more laser sources, or fewer laser sources, than the five laser sources 10-1 through 10-5 shown in FIG. 1.

The diffuser unit 120 shown in FIG. 1 can have one or more diffuser elements 130, here five diffuser elements 130-1 through 130-5, that have fixed positions with respect to the diffuser unit 120, i.e., such that the diffuser elements 130 do not move independently of the diffuser unit 120. It is noted, however, that some implementations of the diffuser unit 120 could provide for independent movement of one or more diffuser elements 130, e.g., via the use of microelectromechanical system (MEMS) elements or the like.

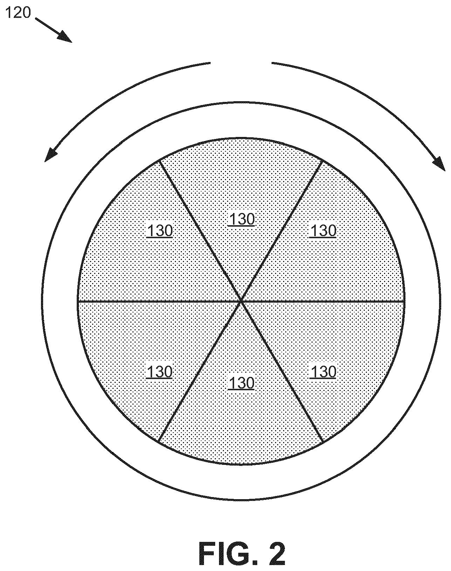

As further shown in FIG. 1, the mounting unit 110 of system 100 can facilitate adjusting a position of the diffuser unit 120 within the optical path of the group of co-aligned laser sources 10. Adjustments facilitated by the mounting unit 110 can include rotation and/or translation of the diffuser unit 120 about one or more axes. Various examples of adjustments that can be performed by the mounting unit 110 are described in further detail below with respect to FIGS. 2-4. Additionally, the diffuser elements 130 of the diffuser unit 120 can alter angular beam widths of emitted light from respective ones of the group of co-aligned laser sources 10, e.g., as the emitted light from the laser sources 10 passes through the respective diffuser elements 130, according to a function of the position of the diffuser unit 120 within the optical path of the laser sources 10, e.g., as adjusted by the mounting unit 110.

As used herein, the terms "target width," "beam width," "angular beam width," and/or similar terms refer to the width of an angle formed by respective reference points associated with an illumination beam produced by the system 100. Beam width can be expressed in terms of a full angle, e.g., an angle formed from a first point on the edge of an intensity profile of an illumination beam to a second point on the profile that is opposite the first point, or a half angle, e.g., an angle formed from a point on the edge of an intensity profile of an illumination beam to the center intensity profile peak of the illumination beam. Additionally, the "edge" of an illumination beam can be defined according to any suitable criteria. For example, the edge of an illumination beam can be defined based on the 1/e² diameter of the beam, which refers to a set of opposing points at which an illumination intensity of the beam is 1/e², or approximately 13.5%, of the maximum illumination intensity of the beam (e.g., at the center of the beam). Other definitions could also be used.

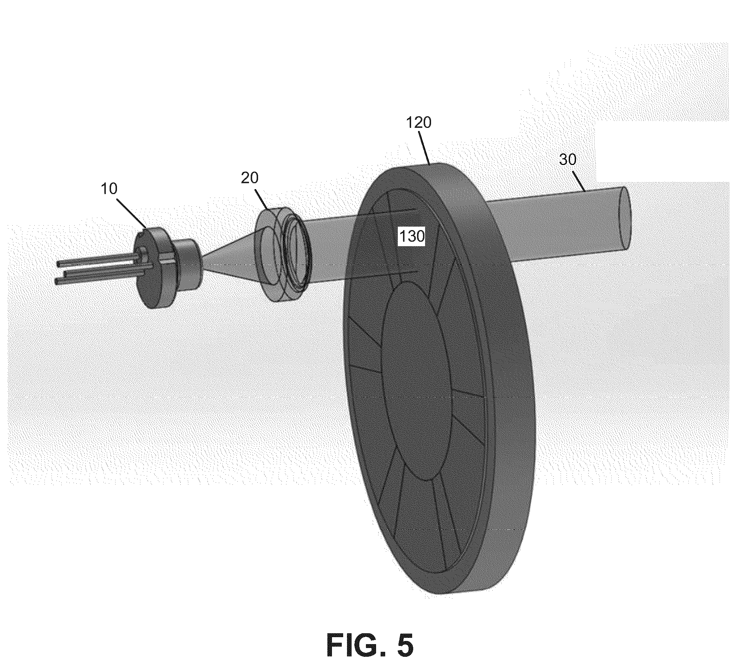

In implementations, the laser sources 10 shown in FIG. 1 can include laser diodes, and the light emitted from the respective laser diodes can be passed through respective collimating lenses (not shown in FIG. 1) to provide collimated beams for modification via the diffuser elements 130 of the diffuser unit 120, as will be described in further detail below with respect to FIG. 5. As a result of the combination of collimating lenses and the diffuser elements 130 of the diffuser unit 120, light can be emitted from the laser sources 10 at a desired far field divergence, e.g., by initially emitting a fixedconvergence beam via the laser sources 10, which can then be either altered by the diffuser elements 130 or allowed to pass through the diffuser elements 130 unaltered. The extent, if any, to which the diffuser elements 130 alter the beam can be adjusted as will be described in further detail below.

System 100 as shown in FIG. 1, when used in combination with a group of co-aligned laser sources 10, can facilitate a small handheld device that, in comparison to conventional systems, can be capable of both pointing and illumination with higher output power while maintaining higher-precision pointing with higher irradiance at the target and smoother illumination properties. For instance, the laser sources 10 shown in FIG. 1 can be single mode laser diodes that each have a comparatively smaller spatial footprint and output power level in comparison to conventional systems (e.g., from approximately 50-250 mW), which when co-aligned and passed through the diffuser unit 120 can output overlapping beams that effectively function as a single output beam with the approximate combined power level of each of the laser sources 10. By way of non-limiting example, the laser sources 10 shown in FIG. 1 could each be approximately 200 mW, for a total output power level of approximately 1 W.

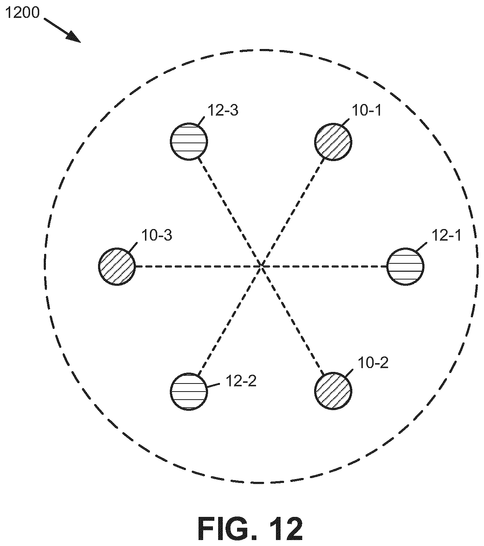

In some implementations, one or more higher power laser emitters, such as multi-mode lasers, could be used in addition to and/or in place of lower power single mode emitters to provide additional function sets and/or higher output power at the cost of increased device size, lower pointer precision, and/or illumination beam smoothness for functions that utilize the multi-mode lasers. Examples of laser arrays with multiple types of laser sources, which could include single mode and/or multi-mode lasers, are described in further detail below with respect to FIGS. 12-13.

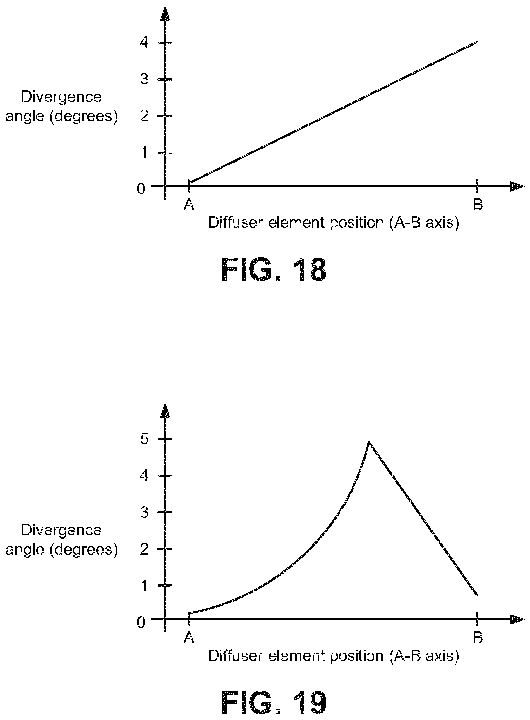

The laser sources 10 shown in FIG. 1 can facilitate a high-power single mode pointer beam, where multiple lasers are used to obtain power and beam quality that are desirable for low divergence in a small spatial package. Each of the laser sources 10 can pass through respective diffuser elements 130 of the diffuser unit 120 such that speckle patterns at a far-field target will be produced by a coherent laser source and the diffuser elements 130, e.g., due to constructive and/or destructive interference caused by beam wavefront interacting with the diffuser elements 130, will lay on top of each other and improve overall beam uniformity. To further facilitate this improved uniformity and improved intensity profile shape, one or more of the diffuser elements 130 can be diffractive optical elements (DOEs) that are designed to take advantage of the coherence of the light emitted via the laser sources 10. These DOEs can be patterned, e.g., holographically or via computer generation, to produce far-field beam patterns in variable widths as the diffuser unit 120 is adjusted relative to the laser sources 10 by the mounting unit 110. By way of example in which the diffuser elements 130 are DOEs, a pattern (e.g., a gradient pattern or other continuous pattern, a non-continuous pattern, etc.) applied to the diffuser elements 130 can vary the divergence of emitted light from an undisturbed point to a desired maximum divergence, e.g., approximately 3 degrees or another suitable angular divergence, as the diffuser elements 130 are moved relative to the laser sources 10. Examples of patterns that can be utilized in this manner are described in further detail below with respect to FIGS. 18-20.

In implementations, the group of laser sources 10 are fixed relative to each other, e.g., to preserve co-alignment between the laser sources 10. As a result, and because the positions of the diffuser elements 130 are fixed within the diffuser unit 120 as noted above, a static relationship can be maintained between the diffuser elements 130 and the laser sources 10, enabling the diffusion provided via the diffuser elements 130 to be varied based on movement of the diffuser unit 120 via the mounting unit 110 relative to the laser sources 10. Various configurations of the diffuser unit 120 that can enable movement of the diffuser elements 130 relative to the laser sources 10 will now be described with respect to FIGS. 2-4. It is noted, however, that FIGS. 2-4 are provided merely by way of example, and that other types of movement of the diffuser unit 120 via the mounting unit 110 could also be performed.

Turning now to FIG. 2, a front view of an example, non-limiting implementation of the diffuser unit 120 shown in FIG. 1 is illustrated. The example diffuser unit 120 shown in FIG. 2 includes a substrate, here shaped as a disc or wheel, on which respective diffuser elements 130, here six diffuser elements 130, are radially arranged relative to a surface of the substrate. It is noted that the disc- or wheel-shaped substrate shown in FIG. 2 is merely one example of a substrate that could be used for the diffuser unit 120, and that substrates of other shapes, such as hexagonal, octagonal, and/or any other shapes, could also be used. In some embodiments the number of diffuser elements 130 can be equal to the number of laser sources 10 (e.g., as shown in FIG. 1) that interact with the diffuser unit 120; however, the diffuser unit 120 can have more, or less, diffuser elements 130 relative to the number of laser sources 10 in some embodiments. It is further noted that similar to the number of diffuser elements 130 of the diffuser unit 120, the number of laser sources 10 that interact with the diffuser unit 120 can also vary depending on implementation. In general, the amount of laser sources 10 and/or diffuser elements 130 can be chosen based on factors such as a desired device size (e.g., as the overall size of the device can be proportional to the number of laser sources 10 and/or diffuser elements 130), a desired total power level of the device, a desired level of illumination beam quality (e.g., as additional laser sources can increase the uniformity of a diffusion pattern resulting from emitted light passing through the diffuser elements 130), and/or other criteria.

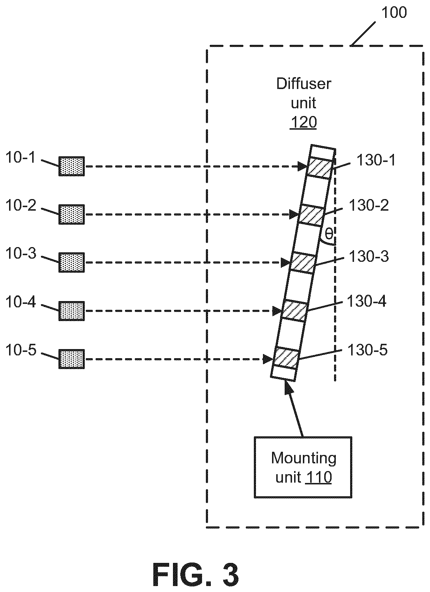

In the example shown in FIG. 2, the position of the diffuser unit 120 within an optical path of laser sources 10, e.g., as shown in FIG. 1, can be adjustable via rotation of the disc. FIG. 2 illustrates an example in which the diffuser unit is rotatable about an axis that is orthogonal to a surface of the diffuser unit 120, e.g., an axis that extends into and/or out of the page with reference to FIG. 2. This can result in clockwise and/or counterclockwise rotation of the diffuser unit 120 on a plane aligned to the page with reference to FIG. 2, e.g., as noted via arrows above the diffuser unit 120. It is noted that the diffuser unit 120 can also rotate with respect to one or more additional axes, e.g., as will be described below with respect to FIG. 3.

By configuring the diffuser unit 120 as shown in FIG. 2, the diffuser unit 120 can be implemented as a diffuser wheel that is positionable into an optical path of a laser array, e.g., an array of laser sources 10 as shown in FIG. 1. The diffuser unit 120 includes respective diffuser elements 130 that can alter an angular divergence of light emitted from the laser array, e.g., as the light passes through the diffuser elements 130, based on a rotational position of the diffuser wheel. In the example shown by FIG. 2, in which the diffuser unit 120 is a diffuser wheel that is rotatable about an axis orthogonal to the diffuser wheel, rotation about that axis can define the rotational position of the diffuser wheel.

In implementations, rotation of the diffuser unit 120 as shown in FIG. 2, and/or rotation or other movement of the diffuser unit 120 about other axes, can be facilitated via a knob, dial, or other control device that is mechanically attached to the diffuser unit 120. Also, or alternatively, the diffuser unit 120 can be placed within a housing or cover, and the housing or cover can be rotatable to facilitate rotation of the diffuser unit 120. In still other examples, rotation or other movement of the diffuser unit 120 could be performed automatically via a motor or other means, e.g., in response to receiving a control input.

Rotation and/or other movement of the diffuser unit 120 can be restricted in various manners, such as by limiting the range of motion or rotation of the diffuser unit 120 via the use of bezels, stops, or other physical components that define the range of motion of the diffuser unit 120. For instance, rotation of the diffuser unit 120 as shown in FIG. 2 could be limited to a maximum angular rotational range of 360/N degrees, where N is the number of diffuser elements 130 of the diffuser unit 120, e.g., a maximum range of 60 degrees for six diffuser elements 130 in the example shown in FIG. 2. As another example, rotation of the diffuser unit 120 could be limited to a maximum angular rotation range of (360/N)-B degrees, where B is the angular width of the beam on the diffuser unit 120, e.g., resulting in a maximum range of 45 degrees for six diffuser elements in a non-limiting example where B is equal to 15 degrees. Other limitations could also be used. In other implementations, rotation and/or movement of the diffuser unit 120 can be stepped, e.g., such that rotation and/or other movement is restricted to defined angular and/or linear increments.

Turning next to FIG. 3, a side view of an example diffuser unit 120 that can be rotated, e.g., by a mounting unit 110, about an axis that is orthogonal to the axis of rotation shown in FIG. 2 is illustrated. Repetitive description of like parts described above with regard to other implementations is omitted for brevity. FIG. 3 shows a system 100 that includes a diffuser unit 120 having diffuser elements 130, and a mounting unit 110 that can facilitate movement of the diffuser unit 120, in a similar manner to that described above with respect to FIG. 1.

In the example shown in FIG. 3, the mounting unit 110 can facilitate movement (e.g., tilting) of the diffuser unit 120 about an axis that is orthogonal to the axis of rotation of the diffuser unit 120 of FIG. 2 as described above. As shown, this can result in the diffuser unit 120 being positioned at an angular offset of impingement, shown by angle θ in FIG. 3, relative to an axis orthogonal to the optical path of the laser sources 10. By facilitating tilt of the diffuser unit 120 at the angle θ, backscatter resulting from light emitted from the laser sources 10 reflecting off the diffuser elements 130 of the diffuser unit 120 and returning to the laser sources 10, which can make the output unstable, can be reduced or eliminated.

In implementations, the angle θ shown in FIG. 3 can be adjustable, e.g., by the mounting unit 110. Alternatively, the angle θ can be a fixed angle, and the mounting unit 110 can facilitate movement and/or rotation of the diffuser unit 120 with respect to other axes, such as by facilitating rotation of the diffuser unit 120 as described above with respect to FIG. 2, tilting of the diffuser unit 120 in an in-page or out-of-page direction with respect to FIG. 3, and/or other suitable movement and/or rotation. In still other implementations, the rotation shown in FIG. 2 could be combined with the tilt shown in FIG. 3, e.g., to enable movement of the diffuser unit 120 about both an axis parallel to the beam propagation as well as the normal axis of the plane of the diffuser unit 120. Other modes of rotation are also possible.

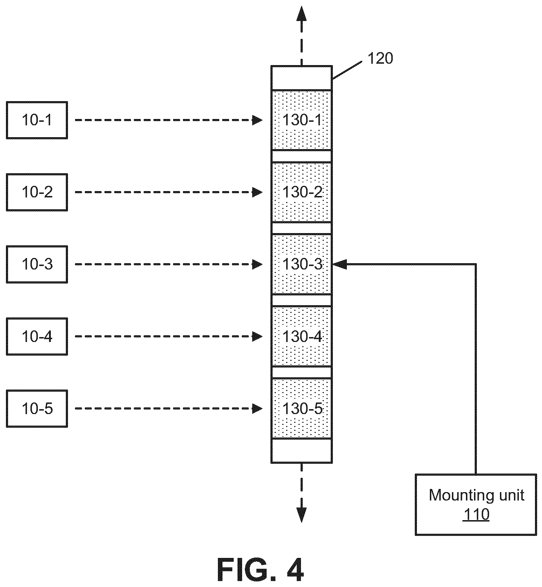

As another example of movement of the diffuser unit 120 that can be facilitated by the mounting unit 110, FIG. 4 shows an implementation in which the mounting unit 110 can facilitate linear movement, and/or other translation, of the diffuser unit 120. While FIG. 4 illustrates only translation in a single spatial dimension for simplicity of illustration, it is noted that the mounting unit 110 could facilitate movement of the diffuser unit 120 in one, two, or three dimensions in any appropriate manner.

In some implementations, the mounting unit 110 could facilitate movement of the diffuser unit 120 along a given spatial dimension via a rail or linear slide, and the mounting unit 110 and/or diffuser unit 120 could include a mechanism to enable the diffuser unit 120 to be physically moved along the rail or slide, e.g., either continuously or in increments. In other embodiments, the mounting unit 110 could include a motor, such as a servo or stepper motor, that could facilitate movement of the diffuser unit 120 in one or more direction in response to a control input. In such an implementation, a permissible range of motion of the diffuser unit 120 via the motor could be defined via rails or slides in a similar manner to the manual movement example given above, the edges of a housing or other component that defines a boundary region for the movement, software constraints applied to a motor, and/or by any other suitable means.

Turning now to FIG. 5, a diagram depicting an isometric view of an optical layout with a beam passing through an example variable optical diffuser is illustrated. It is noted that the example shown by FIG. 5 is merely one example configuration of components that could be utilized, and that other components not shown in FIG. 5 could be used in addition to, or in place of, the shown components.

The optical path shown in FIG. 5 extends from a diode laser source 10, which passes an initial beam through a collimating lens 20 to produce a collimated beam. The collimated beam then passes through a diffuser element 130 of a diffuser unit 120, resulting in an output beam 30 being emitted from the diffuser unit 120 at a desired angular divergence. As described above with respect to FIGS. 2-4, the angular divergence of the output beam 30 can be adjusted by rotating (roll, pitch, yaw, etc.) and/or moving the diffuser unit 120 relative to the laser source 10.

While only one laser source 10 and collimating lens 20 are shown in FIG. 5 for simplicity of illustration, it is noted that multiple laser sources 10 and collimating lenses 20 could be present, e.g., at locations corresponding to positions of other diffuser elements 130 of the diffuser unit 120. For instance, the laser source 10 shown in FIG. 5 could be part of an array of co-aligned laser sources that, when coupled with corresponding collimating lenses, produce parallel and non-concentric beams that can converge in the far field to produce a single visible illumination beam.

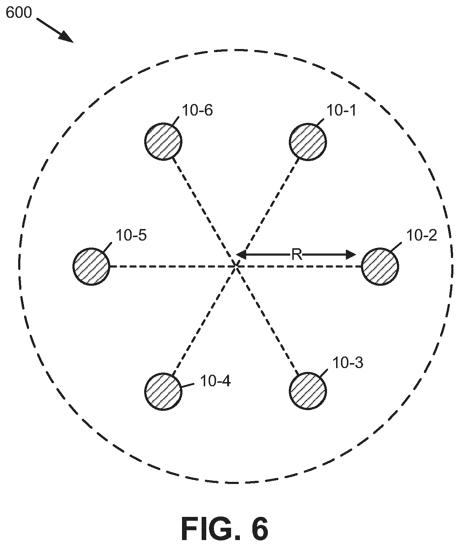

In an implementation, the laser source 10 can be a single mode edge emitter diode, and multiple laser sources 10 can be combined, e.g., in a laser array, to produce a single optical output beam that has similar properties to a beam produced by a multi-mode laser while still retaining the pointing properties of a single mode laser. In some implementations, a combination of single-mode and multi-mode lasers could be used to facilitate pointing and/or illumination in different contexts. Examples of laser arrays that can interact with the diffuser unit 120 are described in further detail below with respect to FIGS. 6-8 and 13-14.

Referring next to FIG. 6, an example array 600 of laser sources 10, here six laser sources 10-1 through 10-6, that can be used in combination with a variable optical diffuser, e.g., a wheel or disc-shaped diffuser unit 120 such as that shown in FIG. 2, is illustrated. As shown in FIG. 6, the laser sources 10 of array 600 can be radially arranged about a central axis, e.g., in a similar manner to a radial arrangement of diffuser elements on a corresponding diffuser unit. In an implementation, the number of laser sources 10 of array 600 can be equal to the number of diffuser elements of the corresponding diffuser unit, e.g., to facilitate a one-to-one relationship between laser sources 10 and the diffuser elements through which light emitted from the laser sources 10 passes. It is noted, however, that more, or fewer, laser sources 10 could also be used, such that emissions from multiple laser sources 10 can pass through the same diffuser element, an emission from a single laser source 10 can pass through multiple diffuser elements, etc.

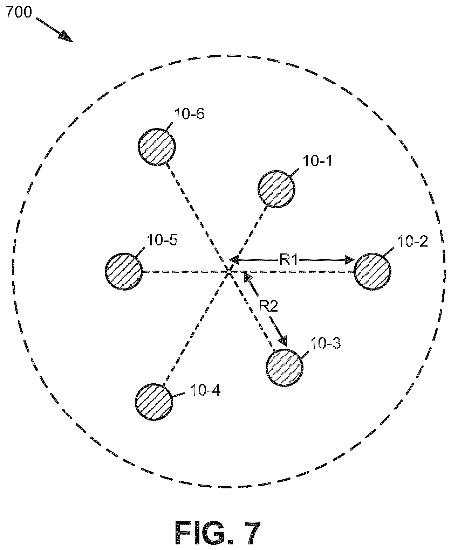

In the example shown in FIG. 6, the laser sources 10 of array 600 are equidistant from a central axis of array 600, i.e., such that each laser source 10 is located at an equal offset R from the center of array 600. In contrast, FIG. 7 shows another example of an array 700 of six radially arranged laser sources 10 in which respective ones of the laser sources 10 are located at different offsets, i.e., R1, R2, etc., from the center of array 700.

In both array 600 shown in FIG. 6 and array 700 shown in FIG. 7, the laser sources 10 are shown as being equally spaced radially, e.g., such that the angle between any two adjacent laser sources 10 with reference to the center of the array 600, 700, is equal. It is noted, however, that the angular spacing between respective pairs of adjacent laser sources 10 could vary in some implementations.

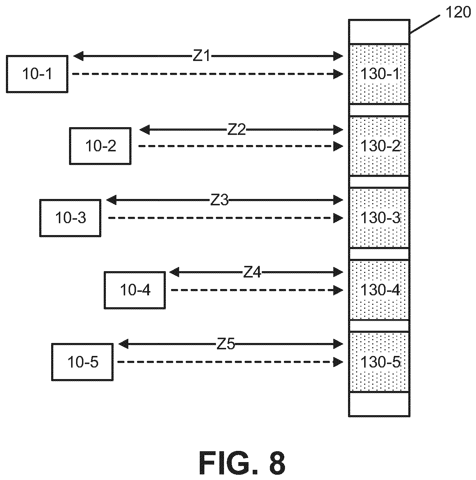

As further shown by FIG. 8, respective laser sources 10 can also be placed at different distances from the diffuser unit 120, shown in FIG. 8 as distances Z1 through Z5 for laser sources 10-1 through 10-5, respectively. In implementations, respective laser sources 10 can be placed both at different offsets Rx from a central axis, as shown in FIG. 7, and at different distances Zx from the diffuser unit, as shown in FIG. 8.

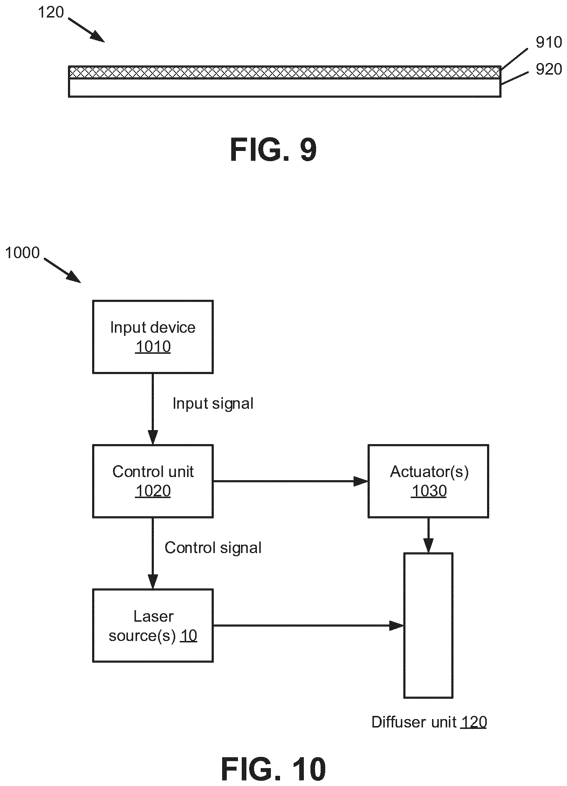

Turning to FIG. 9, a cross sectional view of an example implementation of a diffuser unit 120 in accordance with various implementations described herein is illustrated. In an implementation, the diffuser unit 120 can be composed of polycarbonate and/or another suitable material and can have respective layers 910, 920 corresponding to surfaces of the diffuser unit 120. In the example shown in FIG. 9, the first layer 910 of the diffuser unit 120 can correspond to a non-diffusive (optically flat) surface of the diffuser unit 120 to which an anti-reflective (AR) coating can be applied, e.g., for approximately 800-860 nm. The second layer 920 of the diffuser unit 120 can correspond to a diffusive surface of the diffuser unit 120 and can be left uncoated, e.g., to facilitate diffraction of light passing through the diffusive surface.

While FIG. 9 illustrates one example implementation of a DOE diffuser unit 120, e.g., in which the diffuser unit 120 is a polymer on glass (POG) diffuser, it is noted that other implementations are also possible. For example, a diffuser unit 120 such as that shown in FIG. 9 could be a POG diffuser in which both layers 910, 920 are AR coated, which can result in a difference in transmission loss, magnitude of back-reflected light, and/or other properties as compared to a diffuser in which only one layer is AR coated. In still other implementations, a diffuser unit 120 such as that shown in FIG. 9 can be fabricated using non-POG processes, such as by directly etching a diffraction pattern into a glass substrate surface. Other implementations are also possible.

With reference now to FIG. 10, a block diagram of a system 1000 that facilitates light emission control for a laser array, e.g., an array of laser sources as described above, is illustrated. System 1000 as shown in FIG. 10 includes an input device 1010 that receives a power mode input, and a control unit 1020 that can configure a control signal according to the power mode input provided by the input device 1010, and/or other input sources, and supply the configured control signal to at least one laser source 10 in a group of laser sources 10, e.g., the group of laser sources 10 described above with reference to FIG. 1. The laser sources 10 can then emit light based on the control signal, which can be transformed by a diffuser unit 120 as described above.

The control unit 1020 can be implemented as a computing device, e.g., an embedded computer, etc., that can include a memory (e.g., an instruction memory, etc.) on which computer-executable instructions are stored and a processor that can execute the stored instructions, e.g., to facilitate configuration of a control signal based on a selection input and/or to facilitate other operations. As additionally shown in FIG. 10, the input device 1010 that interacts with the control unit 1020 can include manual input devices (e.g., a knob or dial, a keypad, etc.) that facilitate entry of a selection input corresponding to a desired function set of the system 1000. Also, or alternatively, the input device 1010 can include illumination sensors, automatic feedback systems, rangefinders, and/or other devices from which a power mode input can be produced based on various factors. It is noted that, in some implementations, the input device 1010, and/or other devices with which the control unit 1020 can interact, can include devices external to the system 1000 that can be communicatively coupled to the system 1000 via any suitable wired or wireless communication technologies.

In implementations, a control signal generated by the control unit 1020 can facilitate independently driving one or more individual laser sources 10, or groups of laser sources 10, e.g., to facilitate turning respective laser sources 10 on or off independently of other laser sources 10. Also, or alternatively, the control unit 1020 can facilitate adjusting operating properties of one or more laser sources 10. For example, the control unit 1020 could vary a power level provided to a laser source 10, e.g., to control an intensity of light emitted from the laser source 10 and/or for other purposes. As another example, the control unit 1020 could apply pulse width modulation (PWM) to a control signal supplied to a given laser source 10, e.g., in addition to, or in place of, varying a constant power level provided to the laser source 10. For a PWM or other non-constant signal, the control unit 1020 could also vary an uptime, duty cycle, or other properties of the signal to control the brightness of a given laser source 10, an amount of power consumed by the laser source 10, and/or other properties.

As further shown in FIG. 10, the control unit 1020 can also control one or more motorized actuators 1030 that drive the diffuser unit 120, e.g., in order to set a rotational (or translational) position of the diffuser unit 120 to a determined position based on inputs provided via the input device 1010 and/or analysis of those inputs. This can be done, for example, to automatically move the diffuser unit 120 to a position that will result in an illumination beam being emitted from system 1000 at a desired beam width. It is noted, however, that the actuator(s) 1030 shown in FIG. 10 can be omitted in some implementations, e.g., implementations in which the diffuser unit 120 is moved manually and/or by means other than the actuator(s) 1030.

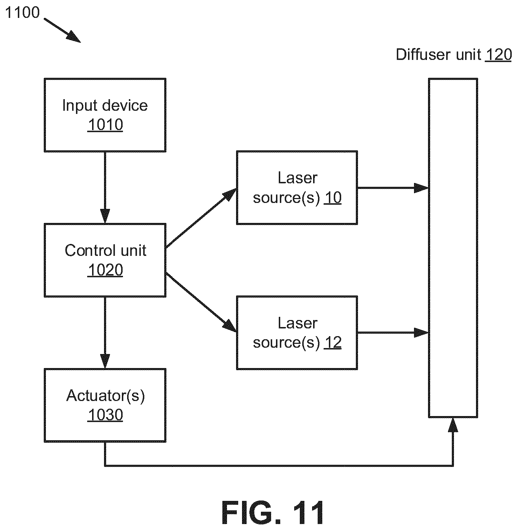

Turning next to FIG. 11, a block diagram of a system 1100 that facilitates light emission control for a heterogeneous laser array, e.g., an array including first laser sources 10 of a first type and second laser sources 12 of a second type, is illustrated. System 1100 as shown in FIG. 11 includes an input device 1010, a control unit 1020, and (optionally) one or more actuators 1030, which can be configured similarly to that described above with respect to FIG. 10. The control unit 1020 of system 1100 can provide control output to a laser array that can include two distinct subgroups of laser sources 10, 12. For instance, based on a selection input from the input device 1010, the control unit 1020 can drive a selected subgroup of the laser sources 10, 12, or combinations thereof, based on the selection input.

In implementations, the laser sources 10, 12 can differ in terms of light wavelength, e.g., where the first subgroup of laser sources 10 emits light at a first wavelength, such as IR or near-IR (e.g., approximately 780nm to 1400nm) or the like, and the second subgroup of laser sources 12 emits light at a second, different wavelength, such as short wave IR (SWIR, e.g., approximately 1400nm to 3000nm) or the like. By utilizing laser sources 10, 12 of different light wavelengths, system 1100 can facilitate the use of multiple illumination wavelengths via a single device. In an implementation in which the laser sources 10, 12 correspond to different light wavelengths, the control unit 1020 can select among the available wavelengths via a selection input from the input device 1010, e.g., a switch, button, slider, or other physical input device that facilitates selection of a desired illumination mode. In some implementations, multiple wavelengths of light could also be used together, e.g., such that respective night vision sensors that respond to different wavelengths of light can be used with a single illuminator device at the same time.

In other implementations, the laser sources 10, 12 can differ in other properties, such as size, mode (e.g., single mode or multi-mode, etc.), or the like, and the control unit 1020 can facilitate selection of one or more laser sources 10, 12 for a given function set based on those properties. By way of example, the laser sources 10 could be single mode lasers that are selected by the control unit 1020 for pointing functions, and the laser sources 12 could be multi-mode lasers that are selected by the control unit 1020 for illumination functions. Other examples are also possible.

In still other implementations, the diffuser unit 120 itself can provide passive control for selecting respective laser sources 10, 12. For instance, the diffuser unit 120 could include multiple diffuser elements 130 that are tuned to different light wavelengths, and/or opaque elements, and movement and/or rotation of the diffuser unit 120 could selectively allow light emitted by a given subgroup of the laser sources 10, 12 to pass through the diffuser unit 120, e.g., by blocking light from the unselected laser sources 10, 12 via the opaque elements while in a given position.

Respective examples of heterogeneous laser arrays that can be utilized in combination with system 1100 are shown in FIGS. 12-13. Turning first to FIG. 12, a first example laser array 1200 has three laser sources 10-1, 10-2, 10-3 of a first type along with three laser sources 12-1, 12-2, 12-3 of a second, different type. It is noted that the number of laser sources 10, 12 shown in FIG. 12 are merely for purposes of illustration and that any number of laser sources 10, 12, including equal or unequal numbers of the laser sources 10, 12, could be present. Additionally, while the laser sources 10, 12 of the laser array 1200 are interleaved, it is also noted that other configurations could be used, e.g., such as having each type of laser sources 10, 12 in adjacent groups. It is further noted that while the laser sources 10, 12 of the laser array 1200 are radially symmetric with respect to a center point, the laser sources 10, 12 could vary in terms of distance from the central axis (e.g., R as described above with respect to FIGS. 6-7), distance from a corresponding diffuser unit 120 (e.g., Z as described above with respect to FIG. 8), angles between respective laser sources 10, 12, and/or other properties.

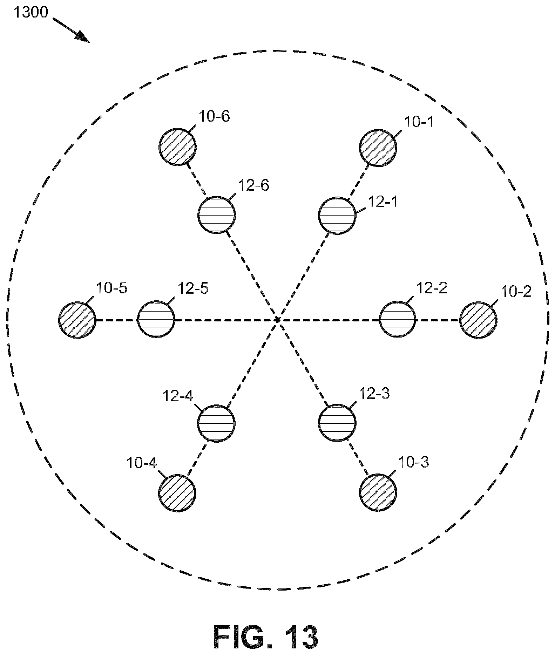

In an implementation, the laser sources 10, 12 shown in laser array 1200 can have a one-to-one, or near-one-to-one, mapping to respective diffuser elements 130 of a diffuser unit 120, e.g., such that each laser source 10, 12 is paired with a diffuser element 130 that is tuned to its specific light wavelength. As another example, laser array 1300 as shown in FIG. 13 shows an implementation utilizing a many-to-one mapping between laser sources 10, 12 and diffuser elements 130, e.g., in which laser sources 10, 12 of different types can be spatially grouped such that light from one or more laser sources 10, 12 can pass through the same diffuser element 130. In such an implementation, different areas of a given diffuser element 130 can be tuned to different light wavelengths. For instance, an outer portion of a diffuser element could be tuned to a wavelength associated with the laser sources 10, while an inner portion could be tuned to a different wavelength associated with the laser sources 12. In still other implementations, multiple laser sources 10, 12 of the same type could be positioned such that emitted light from multiple homogeneous laser sources 10, 12 could pass through the same diffuser element 130 in a similar manner to that shown by FIG. 13.

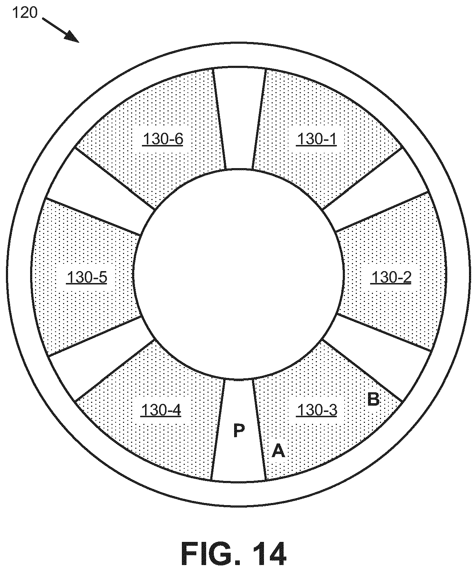

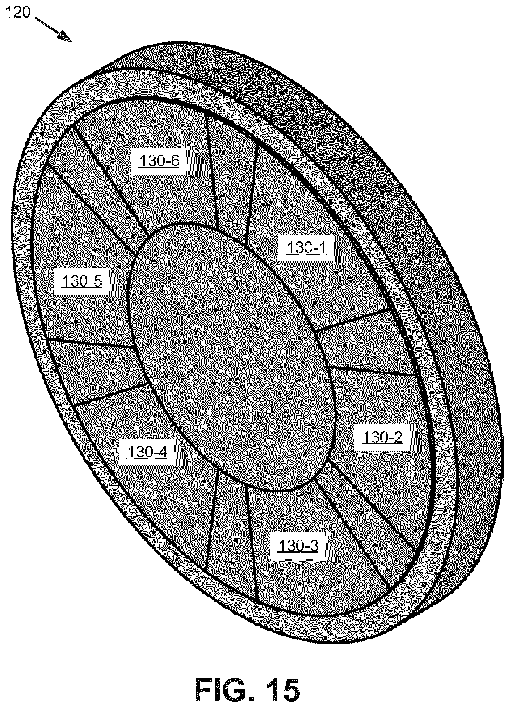

Referring now to FIGS. 14-15, an example implementation of a diffuser unit 120 is shown in a front view and an isometric view, respectively. The diffuser unit 120 shown in FIGS. 14-15 has six diffuser elements 130-1 through 130-6, each of which can be paired with corresponding laser sources to facilitate six co-aligned illumination beams. As shown in FIG. 14, each diffuser element 130 of the diffuser unit 120 can have a pattern or other properties that vary from a first edge A of the diffuser element 130 to an opposite edge B, which can facilitate angular adjustment of illumination beams produced via emitted light passing through the diffuser element 130. As used herein, the term "A-B axis" is used to describe the rotational axis spanning from edges A and B of a diffuser element 130.

As additionally shown by FIGS. 14-15, each diffuser element 130 is separated by areas of the diffuser unit 120 that provide no diffusion, e.g., such that light passing through these areas provide a pointer function P. Thus, by rotation of the diffuser unit 120, an angular beam width of light passing through the diffuser unit 120 can range from a pointer angle (e.g., approximately 0.5 milliradians, etc.), to various illumination angles provided via the diffuser elements 130 along the A-B axis. Examples of illumination angles that can be produced along the A-B axis are described in further detail below with respect to FIGS. 18-19.

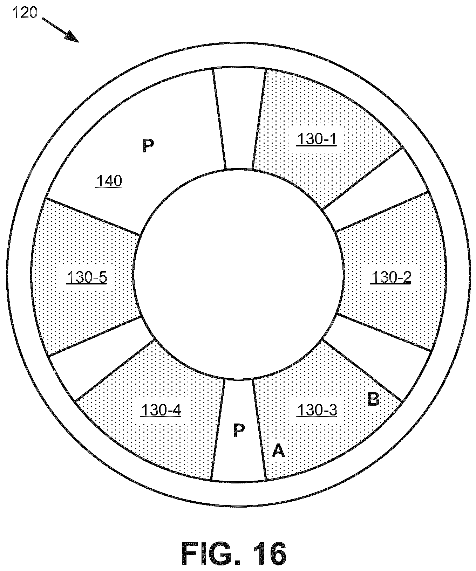

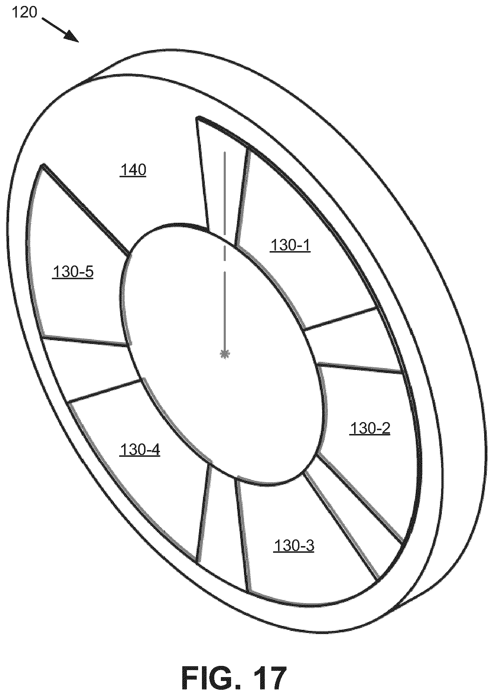

Another example implementation of a diffuser unit 120 is shown in FIGS. 16-17 in a front view and an isometric view, respectively. The diffuser unit 120 shown in FIGS. 16-17 is similar to the one described above with respect to FIGS. 14-15, with the exception that the diffuser unit 120 of FIGS. 16-17 includes one less diffuser element 130. In place of a sixth diffuser element 130, the diffuser unit 120 of FIGS. 16-17 includes a non-diffusive element 140, such as an opening or other suitable element that does not alter properties of light passing through the non-diffusive element 140, that can cause a laser source passing through the non-diffusive element 140 to always provide a pointing function regardless of the rotational position of the diffuser unit 120. Thus, for example, the diffuser unit 120 shown in FIGS. 16-17 could provide simultaneous illumination and pointing functions, e.g., via five laser sources passing through diffuser elements 130-1 through 130-5 and a sixth laser source passing through the non-diffusive element 140 of the diffuser unit 120.

Turning next to FIGS. 18-20, respective gradient patterns and/or other varying properties that can be applied to a diffuser element 130 to facilitate variance in a light divergence angle are illustrated. In implementations, a diffuser element 130 can be a diffractive optical element, and a pattern, e.g., a gradient pattern, can be applied to the diffuser element 130 that causes angular beam width of emitted light to vary according to the location on the diffuser element 130 through which the emitted light passes. With reference to FIG. 18, a simple linear gradient pattern that can be applied to a diffuser element 130 for rotational movement, e.g., along the A-B axis described above with respect to FIGS. 14 and 16, is illustrated. Here, the gradient pattern provides a linear increasing function of angular beam divergence with rotational position, ranging from a pointer function (e.g., near zero divergence) along the A position of the A-B axis, increasing to a maximum divergence, e.g., approximately 4 degrees and/or another suitable maximum divergence, along the B position.

As an example of a more complex pattern, FIG. 19 shows an example in which a divergence angle increases from a pointer function to a maximum divergence in a nonlinear fashion (e.g., according to a quadratic function, etc.) from the A position of the A-B axis to an inflection point, and then decreases from the maximum divergence back to a tighter divergence in a linear fashion from the inflection point to the B position. It is noted that the examples shown in FIGS. 18-19 are intended merely as a non-exhaustive listing of pattern features that could be used, and that other features are possible. In general, a gradient pattern applied to a diffuser element 130 could facilitate any function of angular divergence and diffuser position, which could be continuous or discontinuous.

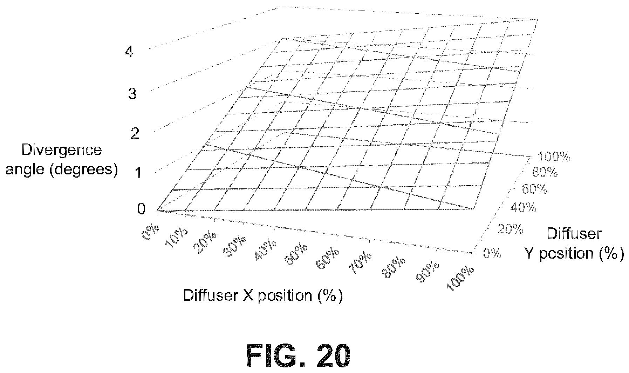

As another example as shown by FIG. 20, a diffuser element 130 can be configured with a multidimensional function of element position to divergence angle, e.g., for a diffuser element 130 that is capable of movement along multiple axes. This could include, for example, translation about multiple spatial axes, a combined rotational and translational position (e.g., such that the divergence angle is a function of both a rotational position along a rotational axis and a spatial (translated) position along a spatial axis), etc.

In addition to providing variance in beam divergence angle, a pattern applied to a diffuser element 130 could also facilitate projection of images, e.g., in implementations where the diffuser element 130 is a holographic element, by shaping light passing through the diffuser element 130 into a desired image. Other implementations are also possible.

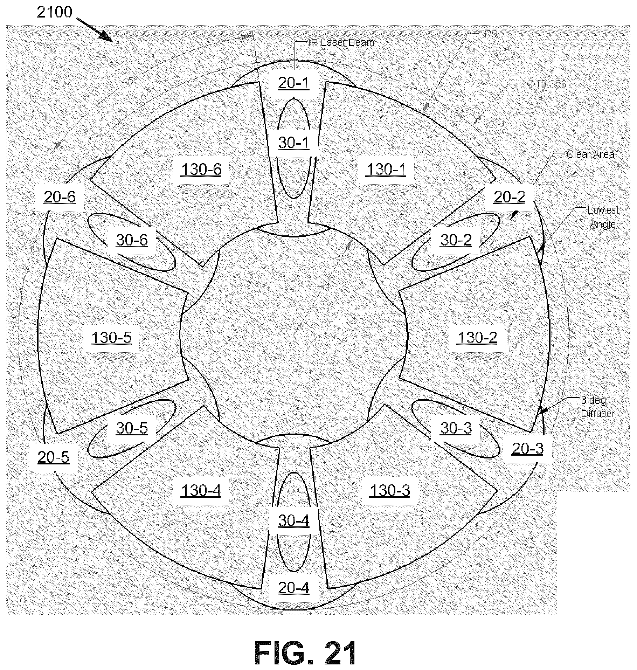

With reference now to FIG. 21, a front view of an adjustable illumination and pointing system 2100 including a variable optical diffuser is illustrated. System 2100 as shown in FIG. 21 includes a circular arrangement of diffuser elements 130, here six diffuser elements 130-1 through 130-6, positioned in front of a similar circular arrangement of laser sources (not shown in FIG. 21) behind collimating lenses 20-1 through 20-6, each of which emit light via output beams 30-1 through 30-6. System 2100 is structured similarly to the system described above with respect to FIG. 5, which is shown facing into an output beam 30.

In the configuration shown by FIG. 21, the output beams 30 produced by the laser sources and passing through the respective collimating lenses 20 pass through openings between the diffuser elements 130, resulting in the output beams 30 being unaltered by the diffuser elements 130, e.g., to facilitate a pointer function that can project over long distances with the original divergence from the collimating lenses 20 and high irradiance at the target. The diffuser elements 130 could then be rotated to facilitate a variable divergence angle of the output beams 30, e.g., as described above with respect to FIGS. 18-19. In implementations, the diffuser elements 130 can be patterned, e.g., according to one or more techniques as described above with respect to FIG. 9.

The diffuser elements 130 shown in FIG. 21 can be patterned in various manners to facilitate a desired intensity profile of illumination provided via the diffuser elements 130. For instance, the diffuser elements 130 could facilitate a Gaussian intensity profile, a flat-top intensity profile, and/or any other suitable intensity profile that is appropriate for the application.

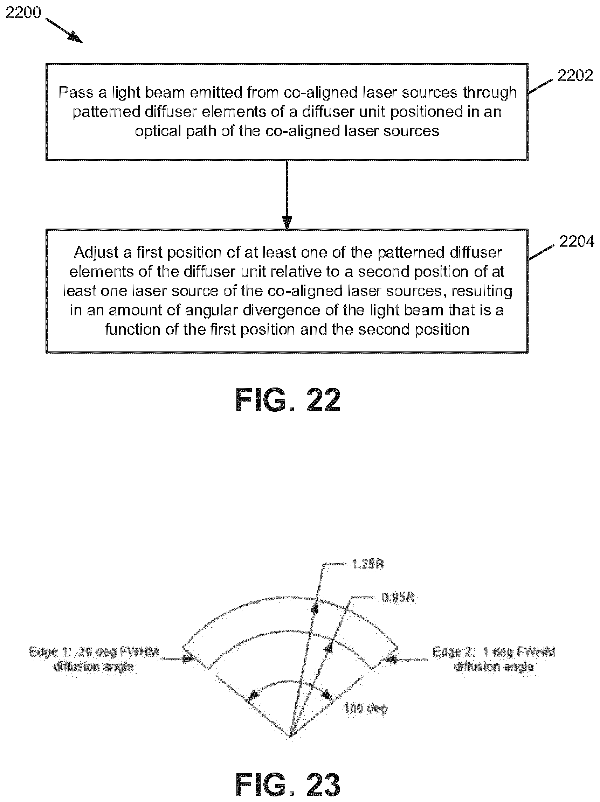

Turning to FIG. 22, a flow diagram of a method 2200 that facilitates illumination and/or pointing via a variable optical diffuser is illustrated. At 2202, a light beam can be passed from co-aligned laser sources (e.g., laser sources 10) through patterned diffuser elements of a diffuser unit (e.g., diffuser elements 130 of a diffuser unit 120) that are positioned in an optical path of the co-aligned laser sources. The diffuser elements can be patterned according to a homogeneous pattern (e.g., a uniform diffuser element), a continuous pattern (e.g., a gradient diffuser element), a non-continuous pattern, a pattern having a combination of continuous and non-continuous elements, et al.

At 2204, a first position of at least one of the patterned diffuser elements of the diffuser unit can be adjusted relative to a second position of at least one laser source of the co-aligned laser sources, resulting an amount of angular divergence of the light beam that is a function of the first position and the second position. In some implementations, the patterned diffuser elements can be radially arranged at given positions with respect to the diffuser unit, and adjusting the position of the patterned diffuser elements at 2204 can include rotating the diffuser unit. For instance, the diffuser unit in some implementations can be fixed to a rotatable portion of a housing at least partially enclosing the diffuser unit, and the adjustment at 2204 can be performed via rotating the rotatable portion of the housing. In other implementations, movement of the diffuser unit can include linear translation along an adjustment axis (e.g., linear translation alone or in combination with other types of movement, such as tilting, rotation about a rotation axis, etc.), and adjusting the position of the patterned diffuser elements at 2204 can be performed by moving the diffuser unit along the adjustment axis. Other techniques to facilitate the adjustment at 2204 could also be performed, e.g., a combination of rotation and linear translation, etc.

FIG. 22 as described above illustrates a method in accordance with certain embodiments of this disclosure. While, for purposes of simplicity of explanation, the method has been shown and described as series of acts, it is to be understood and appreciated that this disclosure is not limited by the order of acts, as some acts may occur in different orders and/or concurrently with other acts from that shown and described herein. For example, those skilled in the art will understand and appreciate that methods can alternatively be represented as a series of interrelated states or events, such as in a state diagram. Moreover, not all illustrated acts may be required to implement methods in accordance with certain embodiments of this disclosure.

Referring now to FIG. 23, example diffusion angles that can be facilitated by a variable optical diffuser as described herein are shown. The angle variance shown in FIG. 23 can be achieved, e.g., by applying a gradient pattern to a diffuser element 130 and/or otherwise varying the properties of the diffuser element 130 over the area of the diffuser element 130. As shown in FIG. 23, the example diffuser can provide a full width at half maximum (FWHM) diffusion angle of approximately 20 degrees at one edge of the diffuser, and this diffusion angle can decrease to approximately 1 degree at the opposite edge of the diffuser. The position at which light passes through the diffuser can be adjusted between the two edges shown in FIG. 23, e.g., by rotating an associated diffuser unit such that light from an associated laser source or other emitter passes through the diffuser at the desired position on the diffuser. Properties of example patterns that can be applied to a diffuser in this manner are described above, e.g., with respect to FIGS. 18-20.

The above description includes non-limiting examples of the various embodiments. It is, of course, not possible to describe every conceivable combination of components or methodologies for purposes of describing the disclosed subject matter, and one skilled in the art may recognize that further combinations and permutations of the various embodiments are possible. The disclosed subject matter is intended to embrace all such alterations, modifications, and variations that fall within the spirit and scope of the appended claims.

With regard to the various functions performed by the above described components, devices, circuits, systems, etc., the terms (including a reference to a "means") used to describe such components are intended to also include, unless otherwise indicated, any structure(s) which performs the specified function of the described component (e.g., a functional equivalent), even if not structurally equivalent to the disclosed structure. In addition, while a particular feature of the disclosed subject matter may have been disclosed with respect to only one of several implementations, such feature may be combined with one or more other features of the other implementations as may be desired and advantageous for any given or particular application.

The terms "exemplary" and/or "demonstrative" as used herein are intended to mean serving as an example, instance, or illustration. For the avoidance of doubt, the subject matter disclosed herein is not limited by such examples. In addition, any embodiment or design described herein as "exemplary" and/or "demonstrative" is not necessarily to be construed as preferred or advantageous over other embodiments or designs, nor is it meant to preclude equivalent structures and techniques known to one skilled in the art. Furthermore, to the extent that the terms "includes," "has," "contains," and other similar words are used in either the detailed description or the claims, such terms are intended to be inclusive - in a manner similar to the term "comprising" as an open transition word - without precluding any additional or other elements.

The term "or" as used herein is intended to mean an inclusive "or" rather than an exclusive "or." For example, the phrase "A or B" is intended to include instances of A, B, and both A and B. Additionally, the articles "a" and "an" as used in this application and the appended claims should generally be construed to mean "one or more" unless either otherwise specified or clear from the context to be directed to a singular form.

The term "set" as employed herein excludes the empty set, i.e., the set with no elements therein. Thus, a "set" in the subject disclosure includes one or more elements or entities. Likewise, the term "group" as utilized herein refers to a collection of one or more entities.

The terms "first," "second," "third," and so forth, as used in the claims, unless otherwise clear by context, is for clarity only and doesn't otherwise indicate or imply any order in time. For instance, "a first determination," "a second determination," and "a third determination," does not indicate or imply that the first determination is to be made before the second determination, or vice versa, etc.

The description of illustrated embodiments of the subject disclosure as provided herein, including what is described in the Abstract, is not intended to be exhaustive or to limit the disclosed embodiments to the precise forms disclosed. While specific embodiments and examples are described herein for illustrative purposes, various modifications are possible that are considered within the scope of such embodiments and examples, as one skilled in the art can recognize. In this regard, while the subject matter has been described herein in connection with various embodiments and corresponding drawings, where applicable, it is to be understood that other similar embodiments can be used or modifications and additions can be made to the described embodiments for performing the same, similar, alternative, or substitute function of the disclosed subject matter without deviating therefrom. Therefore, the disclosed subject matter should not be limited to any single embodiment described herein, but rather should be construed in breadth and scope in accordance with the appended claims below.

### The following is a list of further preferred embodiments of the invention:

Embodiment 1. A system, comprising:
   a mounting unit; and
   a diffuser unit coupled to the mounting unit and positionable by the mounting unit into an optical path of a group of co-aligned laser sources, the diffuser unit comprising diffuser elements having fixed positions with respect to the diffuser unit, wherein the mounting unit facilitates adjusting a position of the diffuser unit within the optical path of the group of co-aligned laser sources, and wherein the diffuser elements alter angular beam widths of emitted light from respective ones of the group of co-aligned laser sources according to a function of the position of the diffuser unit within the optical path of the group of co-aligned laser sources.
Embodiment 2. The system of embodiment 1, wherein the diffuser unit comprises a substrate having the diffuser elements placed therein, wherein the fixed positions of the diffuser elements on the diffuser unit are radially arranged relative to a surface of the substrate, and wherein the position of the diffuser unit within the optical path of the group of co-aligned laser sources is adjustable via rotation of the substrate.
Embodiment 3. The system of embodiment 2, wherein the rotation of the substrate is about at least one axis selected from a group comprising a first axis orthogonal to the surface of the substrate, a second axis orthogonal to the first axis, and a third axis orthogonal to the first axis and the second axis.
Embodiment 4. The system of embodiment 1, wherein the group of co-aligned laser sources comprises:
   a first subgroup of laser sources that emit first light at a first wavelength, and
   a second subgroup of laser sources that emit second light at a second wavelength that is not the first wavelength.
Embodiment 5. The system of embodiment 4, further comprising:
   an input device that receives a selection input; and
   a control unit that drives a selected subgroup of laser sources, selected from the first subgroup of laser sources and the second subgroup of laser sources, based on the selection input.
Embodiment 6. The system of embodiment 1, further comprising:
   an input device that receives a power mode input; and
   a control unit that supplies a control signal to at least one laser source of the group of co-aligned laser sources, the control signal being configured according to the power mode input.
Embodiment 7. The system of embodiment 1, wherein the diffuser elements of the diffuser unit are diffractive optical elements.
Embodiment 8. The system of embodiment 7, wherein patterns are applied to respective surfaces of the diffuser elements, the patterns causing the angular beam widths of the emitted light to vary according to locations on the diffuser elements through which the emitted light passes.
Embodiment 9. The system of embodiment 1, wherein the group of co-aligned laser sources comprises:
   a first subgroup of laser sources comprising at least one single mode laser diode; and
   a second subgroup of laser sources comprising at least one multimode laser diode.
Embodiment 10. A system, comprising:
   a diffuser wheel positionable into an optical path of a laser array; and
   diffuser elements formed into the diffuser wheel, wherein the diffuser elements alter an angular divergence of light emitted from the system via the laser array based on a rotational position of the diffuser wheel.
Embodiment 11. The system of embodiment 10, wherein the diffuser elements are diffractive optical elements.
Embodiment 12. The system of embodiment 11, wherein patterns are applied to respective surfaces of the diffuser elements, the patterns causing the angular divergence of the light emitted from the laser array to vary according to locations on the diffuser elements through which the light passes through the diffuser elements, and wherein the patterns are selected from a group of patterns comprising a homogeneous pattern, a gradient pattern, and a non-uniform pattern.
Embodiment 13. The system of embodiment 10, wherein the diffuser wheel is rotatable about an axis orthogonal to the diffuser wheel, and wherein rotation about the axis defines the rotational position of the diffuser wheel.
Embodiment 14. The system of embodiment 10, further comprising:
   a non-diffusive element formed into the diffuser wheel through which at least one laser source of the laser array emits light.
Embodiment 15. A method, comprising:
   passing a light beam emitted from co-aligned laser sources through patterned diffuser elements of a diffuser unit positioned in an optical path of the co-aligned laser sources; and
   adjusting a first position of at least one of the patterned diffuser elements of the diffuser unit relative to a second position of at least one laser source of the co-aligned laser sources, resulting in an amount of angular divergence of the light beam that is a function of the first position and the second position.
Embodiment 16. The method of embodiment 15, wherein the patterned diffuser elements are radially arranged at first positions, comprising the first position, with respect to the diffuser unit, and wherein the adjusting of the first position comprises rotating the diffuser unit.
Embodiment 17. The method of embodiment 16, wherein the diffuser unit is fixed to a rotatable portion of a housing at least partially enclosing the diffuser unit, and wherein the adjusting of the first position comprises rotating the rotatable portion of the housing.
Embodiment 18. The method of embodiment 15, wherein the co-aligned laser sources comprise first laser sources that emit a first light beam at a first wavelength and second laser sources that emit a second light beam at a second wavelength that is not the first wavelength, and wherein the method further comprises:
   receiving a selection input; and
   driving a group of the co-aligned laser sources selected from the first laser sources and the second laser sources based on the selection input.
Embodiment 19. The method of embodiment 15, wherein movement of the diffuser unit comprises linear translation of the diffuser unit along an adjustment axis, and wherein the adjusting of the first position comprises moving the diffuser unit along the adjustment axis.
Embodiment 20. The method of embodiment 15, wherein the co-aligned laser sources are first co-aligned laser sources, wherein the light beam is a first light beam, and wherein the method further comprises:
   passing a second light beam emitted from a second co-aligned laser source, distinct from the first co-aligned laser sources and co-aligned with the first co-aligned laser sources, through a non-diffusive element in the diffuser unit at a same time as the passing of the first light beam through the patterned diffuser elements.

## Claims

1. A system, comprising:
a mounting unit; and
a diffuser unit coupled to the mounting unit and positionable by the mounting unit into an optical path of a group of co-aligned laser sources, the diffuser unit comprising diffuser elements having fixed positions with respect to the diffuser unit, wherein the mounting unit facilitates adjusting a position of the diffuser unit within the optical path of the group of co-aligned laser sources, and wherein the diffuser elements alter angular beam widths of emitted light from respective ones of the group of co-aligned laser sources according to a function of the position of the diffuser unit within the optical path of the group of co-aligned laser sources.

2. The system of claim 1, wherein the diffuser unit comprises a substrate having the diffuser elements placed therein, wherein the fixed positions of the diffuser elements on the diffuser unit are radially arranged relative to a surface of the substrate, and wherein the position of the diffuser unit within the optical path of the group of co-aligned laser sources is adjustable via rotation of the substrate.

3. The system of claim 2, wherein the rotation of the substrate is about at least one axis selected from a group comprising a first axis orthogonal to the surface of the substrate, a second axis orthogonal to the first axis, and a third axis orthogonal to the first axis and the second axis.

4. The system of claim 1, wherein the group of co-aligned laser sources comprises:
a first subgroup of laser sources that emit first light at a first wavelength, and
a second subgroup of laser sources that emit second light at a second wavelength that is not the first wavelength; and/or
further comprising:
an input device that receives a selection input; and
a control unit that drives a selected subgroup of laser sources, selected from the first subgroup of laser sources and the second subgroup of laser sources, based on the selection input.

5. The system of one of claims 1 to 4, further comprising:
an input device that receives a power mode input; and
a control unit that supplies a control signal to at least one laser source of the group of co-aligned laser sources, the control signal being configured according to the power mode input.

6. The system of one of claims 1 to 5, wherein the diffuser elements of the diffuser unit are diffractive optical elements; and/or
wherein patterns are applied to respective surfaces of the diffuser elements, the patterns causing the angular beam widths of the emitted light to vary according to locations on the diffuser elements through which the emitted light passes.

7. The system of one of claims 1 to 6, wherein the group of co-aligned laser sources comprises:
a first subgroup of laser sources comprising at least one single mode laser diode; and
a second subgroup of laser sources comprising at least one multimode laser diode.

8. A system, comprising:
a diffuser wheel positionable into an optical path of a laser array; and
diffuser elements formed into the diffuser wheel, wherein the diffuser elements alter an angular divergence of light emitted from the system via the laser array based on a rotational position of the diffuser wheel.

9. The system of claim 8, wherein the diffuser elements are diffractive optical elements.

10. The system of claim 9, wherein patterns are applied to respective surfaces of the diffuser elements, the patterns causing the angular divergence of the light emitted from the laser array to vary according to locations on the diffuser elements through which the light passes through the diffuser elements, and wherein the patterns are selected from a group of patterns comprising a homogeneous pattern, a gradient pattern, and a non-uniform pattern.

11. The system of one of claims 8 to 10, wherein the diffuser wheel is rotatable about an axis orthogonal to the diffuser wheel, and wherein rotation about the axis defines the rotational position of the diffuser wheel; or
further comprising:
a non-diffusive element formed into the diffuser wheel through which at least one laser source of the laser array emits light.

12. A method, comprising:
passing a light beam emitted from co-aligned laser sources through patterned diffuser elements of a diffuser unit positioned in an optical path of the co-aligned laser sources; and
adjusting a first position of at least one of the patterned diffuser elements of the diffuser unit relative to a second position of at least one laser source of the co-aligned laser sources, resulting in an amount of angular divergence of the light beam that is a function of the first position and the second position.

13. The method of claim 12, wherein the patterned diffuser elements are radially arranged at first positions, comprising the first position, with respect to the diffuser unit, and wherein the adjusting of the first position comprises rotating the diffuser unit; and/or
wherein the diffuser unit is fixed to a rotatable portion of a housing at least partially enclosing the diffuser unit, and wherein the adjusting of the first position comprises rotating the rotatable portion of the housing.

14. The method of claim 12 or 13, wherein the co-aligned laser sources comprise first laser sources that emit a first light beam at a first wavelength and second laser sources that emit a second light beam at a second wavelength that is not the first wavelength, and wherein the method further comprises:
receiving a selection input; and
driving a group of the co-aligned laser sources selected from the first laser sources and the second laser sources based on the selection input.

15. The method of one of claims 12 to 14, wherein movement of the diffuser unit comprises linear translation of the diffuser unit along an adjustment axis, and wherein the adjusting of the first position comprises moving the diffuser unit along the adjustment axis; or
wherein the co-aligned laser sources are first co-aligned laser sources, wherein the light beam is a first light beam, and wherein the method further comprises:
passing a second light beam emitted from a second co-aligned laser source, distinct from the first co-aligned laser sources and co-aligned with the first co-aligned laser sources, through a non-diffusive element in the diffuser unit at a same time as the passing of the first light beam through the patterned diffuser elements.
